Europäisches Patentamt

European Patent Office

Office européen des brevets

(19)

(11) Veröffentlichungsnummer **0 008 025**
**B1**

(12) **EUROPÄISCHE PATENTSCHRIFT**

(45) Veröffentlichungstag der Patentschrift:
**12.08.81**

(51) Int. Cl.³: **G 05 D 7/01**, **F 16 K 1/22**,
**F 24 F 13/14**

(21) Anmeldenummer: **79102568.7**

(22) Anmeldetag. **20.07.79**

(54) **Regler für die Strömung eines gasförmigen Mediums in einer Leitung.**

(30) Priorität **10.08.78 DE 2835052**

(43) Veröffentlichungstag der Anmeldung.
**20.02.80 Patentblatt 80/4**

(45) Bekanntmachung des Hinweises auf die Patenterteilung
**12.08.81 Patentblatt 81/32**

(84) Benannte Vertragsstaaten.
**AT BE CH FR GB NL SE**

(56) Entgegenhaltungen.
**BE-A-624 077**
**DE-A-2 430 821**
**DE-A-2 432 477**
**DE-A-2 618 037**
**DE-B-Z 1861 XII/47g**
**DE-C-499 691**
**DE-U-7 612 706**
**GB-A-1 157 908**
**GB-A-1 346 019**

(73) Patentinhaber: **SIEGWART Emil,**
**Michael-Blatter-Strasse 6, D-6603 Sulzbach-Neuweiler**
**(DE)**

(72) Erfinder: **SIEGWART Emil, Michael-Blatter-Strasse 6,**
**D-6603 Sulzbach-Neuweiler (DE)**

(74) Vertreter: **Bernhardt, Winfried, Dr.-Ing.,**
**Kobenhüttenweg 43, D-6600 Saarbrücken (DE)**

Anmerkung Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt. wenn die Einspruchsgebühr entrichtet worden ist (Art 99(1) Europäisches Patentübereinkommen).

Regler für die Strömung eines gasförmigen Mediums in einer Leitung

Die Erfindung betrifft einen Regler für die Strömung eines gasförmigen Mediums in einer Leitung, bei dem der freie Leitungsquerschnitt durch eine Klappe veränderbar ist, die durch die Strömung gegen eine Federkraft im Schließsinne verdrehbar ist, insbesondere eine Klappe, deren Welle nach einer Querschnittsmittelachse angeordnet ist und die nahe der Welle gewinkelt ist, wobei ihr einer Schenkel in Öffnungsstellung im wesentlichen parallel zur Leitungsachse nach hinten und in Schließstellung schräg nach hinten und ihr anderer Schenkel in Öffnungsstellung schräg nach vorne und in Schließstellung im wesentlichen rechtwinklig zur Leitungsachse ausgerichtet ist.

Leitungssysteme gasförmiger Medien zeigen immer in irgendwelchen Frequenzbereichen Resonanz, z. B. bei Erregung von Schwingungen durch periodische Abschälungen der Strömung an einer besonderen Stelle. Die Erregungs- und Resonanzbedingungen liegen in der Regel in bestimmten Vordruck- und Durchsatzbereichen vor.

Die Resonanzschwingungen haben die unangenehme Folge, die Funktion von Strömungsreglern zu beeinträchtigen. Sie bringen die Reglerklappen, die sich auf das Gleichgewicht zwischen ihrer Federkraft einerseits und der Strömungskraft andererseits einstellen und in dieser Regelstellung verharren sollen, zum Flattern.

Das ist von besonderer Bedeutung bei dem Regler nach der DE-A-2 333 694, da dieser sich durch eine außergewöhnliche Feinfühligkeit auszeichnet. Schon in den ersten beiden deutschen Zusatzanmeldungen gemäß DE-A-24 48 271.1 und DE-A-26 18 037.0 sind Maßnahmen zur Verhinderung oder wenigstens Dämpfung von Flatterbewegungen vorgeschlagen worden. Diese Maßnahmen haben sich bewährt. Bei Leitungsdurchmessern bis 100 mm reichen sie ohne weiteres aus. An größeren Klappen zeigt sich jedoch trotzdem eine gewisse Neigung, zu »schwimmen«, jedenfalls bei Leitungsdurchmessern von 140 – 160 mm, die weitere Dämpfungsmittel erfordert.

Man kennt pneumatische Dämpfungsglieder, die hier eingesetzt werden können. Diese aus einem Pneumatikzylinder mit gedrosselter Luftzu- und -abführung bestehenden Dämpfungsglieder sind jedoch aufwendig und vergleichsweise empfindlich.

Der Erfindung liegt die Aufgabe zugrunde, eine einfache, robuste und funktionssichere Dämpfung zu schaffen.

Erfindungsgemäß ist zur Lösung dieses Problems bei einem Regler der eingangs bezeichneten, z. B. aus der DE-A-2 333 694 bekannten Art vorgesehen, daß die Klappe mit einem Fixpunkt verbunden ist durch eine an der Klappe angelenkte Stange und eine die Stange umfassende, an dem Fixpunkt angelenkte Gleitführung, oder umgekehrt, und die Umfassung der Stange durch die Gleitführung axial so kurz bemessen ist, daß Relativbewegung zwischen Stange und Gleitführung infolge der Reibung zu einer Verkantung und Anklemmung der Gleitführung auf der Stange führt.

Durch die Anklemmung entsteht auch bei geringerem Reibungskoeffizienten Reibungskraft in einem Maße, das ausreicht, die Klappe gegen die die Flatterbewegung erzeugenden Kräfte zu halten oder wenigstens diesen Kräften nur so langsam nachzugeben, daß sie sich nicht mehr entscheidend auswirken können Die Regelfunktion der Klappe wird trotzdem nicht gestört. Änderungen des Vordrucks und in Reaktion darauf der Klappenstellung vollziehen sich um Größenordnungen langsamer als die Flatterbewegungen. Die Umfassung kann nachgeben, ehe es zur Eskalation der Reibungskraft durch Verkantung und Anklemmung, dadurch Erhöhung der Reibungskraft, dadurch weiter vergrößerte Verkantung und Anklemmung usf. kommt; auch haben andere, lockernde Einflüsse Zeit, sich auszuwirken, wie Vibrationen Jedenfalls hat sich die neue Dämpfung im praktischen Einsatz als außerordentlich wirksam und in keiner Weise störend erwiesen.

Um eventuelle vollständige Blockierungen auszuschließen, wird in vorteilhafter Ausgestaltung der Erfindung vorgeschlagen, daß der Verkantungswinkel der Gleitführung gegenüber der Stange durch Anschläge begrenzt ist, die die Gleitführung in axialem Abstand von ihren Klemmflächen aufweist. Eine noch einmal vorteilhafte Weiterbildung besteht dann darin, daß die Gleitführung durch eine Bohrung und die Anschläge durch das Ende einer axial sich anschließenden erweiterten Bohrung in einem an dem Fixpunkt oder der Klappe angelenkten Teil gebildet ist bzw. sind.

Vorzugsweise schließt sich auf beiden Seiten der genannten Bohrung eine erweiterte Bohrung der genannten Art an.

Häufig werden diese Maßnahmen jedoch gar nicht notwendig sein, vor allem dann nicht, wenn die Umfassung im Vergleich zum Stangendurchmesser und zum Spiel zwischen Stange und Umfassung genügend axiale Länge hat, um den Verkantungswinkel schon damit begrenzt zu halten.

Das Material der Gleitführung kann ein Kunststoff sein, vorzugsweise Teflon oder Nylon (registrierte Warenzeichen).

Vorzugsweise ist die Stange an dem genannten in Öffnungsstellung schräg nach vorne stehenden Schenkel der Klappe angelenkt und die Gleitführung an einer Scheibe, die in Strömungsrichtung hinter der genannten Welle axial in der Leitung angeordnet ist und deren hinteres Ende vorzugsweise nach Lage und Kontur im wesentlichen eine bezüglich der Strömung konforme Abbildung des genannten Klappenschenkels bei einer mittleren Öffnungsstellung der Klappe ist.

Die Zeichnungen geben ein Ausführungsbeispiel der Erfindung wieder.

Fig. 1 zeigt einen im axialen Schnitt angedeuteten Strömungsregler mit einer Draufsicht auf eine Dämpfungseinrichtung, einen Teil weggebrochen;

Fig. 2 zeigt einen Schnitt bzw. eine Ansicht gemäß Linie II-II in Fig. 1;

Fig. 3 zeigt einen Ausschnitt aus Fig. 1 in anderer Stellung der Teile zueinander.

In einem z. B. in eine Luftleitung eingebauten rohrförmigen Reglergehäuse 1 ist in geringem Abstand von der Querschnittsmittelachse eine Welle 2 angeordnet, auf der eine in ihrem Längsschnitt mittig um etwa 30° gewinkelte Klappe 3 sitzt. Die Klappe 3 ist mittels Klemmkörpern 4, die hier nicht näher dargestellt und beschrieben zu sein brauchen, auf der Welle 2 befestigt. Die Klemmkörper 4 sind vor der Winkelkante der Klappe 3 als zylindrische Gegengewichte ausgebildet, die die Schwerelinie der Klappe in die Welle 2 legen.

Die Welle 2 ist im nicht gezeichneten, auf dem Reglergehäuse sitzenden Lagern, beispielsweise gemäß DE-A-26 18 037, gelagert.

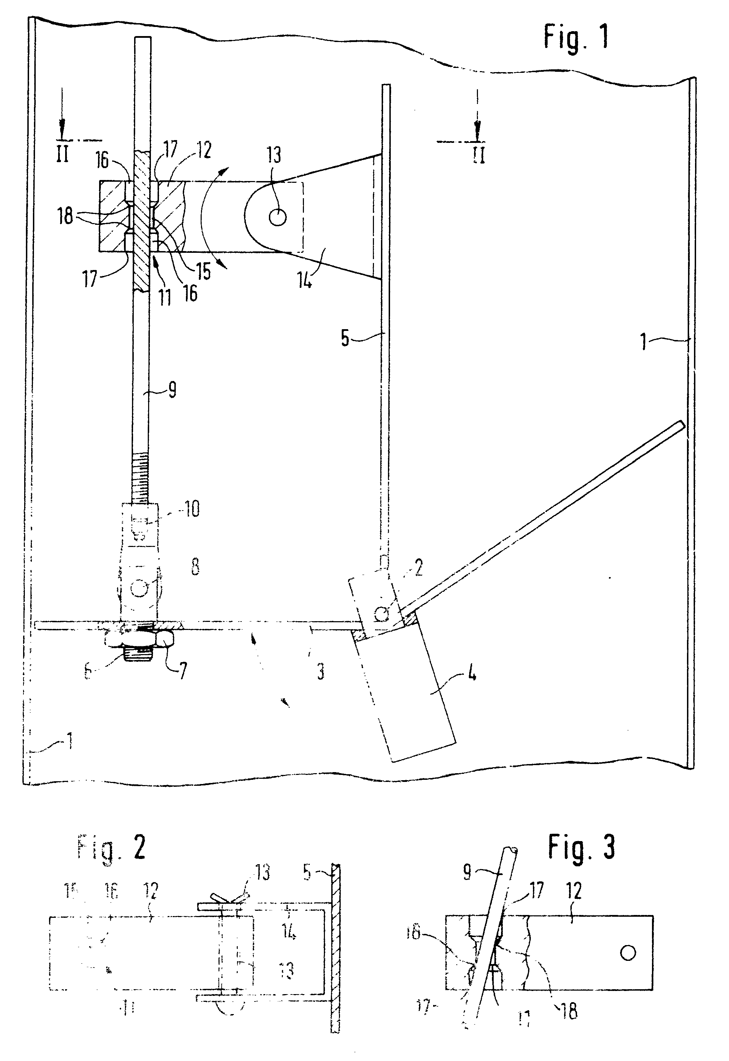

An der Welle 2 und der Klappe 3 greift eine ebenfalls nicht gezeichnete Feder an, beispielsweise gemäß DE-A-24 48 271, die die Klappe 3 aus der in Fig. 1 dargestellten Schließstellung in die Öffnungsstellung zu ziehen sucht, in der der in Fig. 1 schräg verlaufende, hintere Klappenschenkel axial nach hinten und der andere, vordere Klappenschenkel schräg nach vorne steht.

In der Axialrichtung des rohrförmigen Reglergehäuses 1 erstreckt sich hinter der Welle 2 in einer Ebene mit dieser eine Scheibe 5.

Sie gliedert sich in einen rechteckigen, beidseitig an der Gehäusewandung anliegenden vorderen Abschnitt und einen an diesen sich anschließenden, annähernd halbkreisförmigen hinteren Abschnitt. Diese hintere Kontur der Scheibe 5 ist eine bezüglich der Strömung konforme Abbildung des hinteren Klappenschenkels bei einer mittleren Stellung der Klappe. Der Raum zwischen der Scheibe 5, dem Klappenschenkel und der Strömungswand ist dadurch strömungstechnisch abgeschlossen und bleibt infolgedessen weitgehend frei von Turbulenzen, die Störkräfte auf die Klappe ausüben können.

Die Klappe 3 regelt bei verschiedenen Vordrucken die gleiche Strömungsmenge ein, indem sie den Leitungsquerschnitt unter der Wirkung des gegen sie anströmenden Mediums mehr oder weniger weit verschließt.

Soweit ist der Regler aus den genannten Vorveröffentlichungen bekannt.

An dem vorderen Klappenschenkel ist nun mittels eines Gewindebolzens 6 und einer Mutter 7 ein Gelenk 8 befestigt, an dessen beweglichem Teil ein Stab 9 bei 10 angeschraubt ist. Der Stab 10 ragt durch eine Bohrung 11 in einem länglichen Kunststoffklotz 12 quadratischen Querschnitts, der mittels eines Splints 13 an einem starr an der Scheibe 5 befestigten, U-förmigen Bügel 14 gelenkig befestigt ist.

Die Bohrung 11 gliedert sich in einen den Stab nur mit engem übertrieben gezeichneten Spiel umfassenden mittleren Abschnitt 15, an den sich auf beiden Seiten ein erweiterter Abschnitt 16 anschließt. Die Außenkanten der beiden erweiterten Abschnitte 16 sind mit 17 bezeichnet, die beiden Endkanten des mittleren Abschnitts 15 mit 18.

Bewegt sich die Klappe 3, so schiebt sich der Stab 9 durch die Bohrung 11. Infolge seiner Reibung am mittleren Abschnitt 15 der Bohrung, in dem er geführt ist, nimmt der Stab 9 den Kunststoffklotz 12 in seine Bewegung mit, d. h., er veschwenkt ihn. Dabei verkantet sich der Kunststoffklotz 12 gegenüber dem Stab 9, so daß die Endkanten 18 des mittleren Abschnitts 15 der Bohrung an den Stab 9 angedrückt werden. Ist die Bewegung des Stabs 9 langsam, wie bei Änderungen der Regelstellung der Klappe 3, so erreicht die Andrückung an den Endkanten 18 keinen so großen Wert; der Stab rutscht, unterstützt durch Vibrationen usw., an den Kanten entlang. Ist die Bewegung des Stabs schnell, wie bei Flatterbewegungen der Klappe, so wird der Kunststoffklotz 11 in eine stärkere Verkantung gezogen, die die Anpreßkräfte an den Endkanten 18 erhöht, was wiederum eine noch stärkere Verkantung zur Folge hat usf., bis die Stange 9 an den Außenkanten 17 zur Anlage kommt. Mit der Anordnung dieser Endkanten 17 können die entstehenden Reibungskräfte auf einen gewünschten Wert begrenzt werden. Auch die Materialauswahl für den Kunststoffklotz kann im Hinblick auf einen gewünschten Reibungskoeffizienten vorgenommen werden.

Ausgezeichnete Ergebnisse werden bei dem beschriebenen Regler auch mit einer einfacheren Abwandlung des Kunststoffklotzes 12 erzielt, nämlich einem Kunststoffklotz mit einer Bohrung von durchgehend gleichem Durchmesser, also ohne Erweiterungen, die die Stange, die z. B. einen Durchmesser in der Größenordnung von 2,5 mm hat, mit $1/20 - 1/10$ mm Spiel auf einer axialen Länge von etwa dem dreifachen des Stangendurchmessers umgibt.

**Patentansprüche**

1. Regler für die Strömung eines gasförmigen Mediums in einer Leitung, bei dem der freie Leitungsquerschnitt durch eine Klappe veränderbar ist, die durch die Strömung gegen eine Federkraft im Schließsinne verdrehbar ist, insbesondere eine Klappe, deren Welle nahe einer Querschnittsmittelachse angeordnet ist und die nahe der Welle gewinkelt ist, wobei ihr einer Schenkel in Öffnungsstellung im wesentlichen parallel zur Leitungsachse nach hinten und in Schließstellung schräg nach hinten und ihr anderer Schenkel in Öffnungsstellung schräg nach vorne und in Schließstellung im wesentlichen rechtwinklig zur Leitungsachse angeordnet ist, dadurch gekennzeichnet, daß die Klappe (3) mit einem Fixpunkt (13, 14) verbunden ist durch eine an der Klappe (3) angelenkte Stange (9) und eine die Stange (9) umfassende, an dem Fixpunkt (13, 14) angelenkte Gleitführung (12, 15), oder umgekehrt, und die Umfassung der Stange (9) durch die Gleitführung (12, 15) axial so kurz bemessen ist, daß Relativbewegung zwischen Stange (9) und Gleitführung (12, 15) infolge der Reibung zu einer Verkantung und Anklemmung der Gleitführung (12, 15) auf der Stange (9) führt.

2. Regler nach Anspruch 1, dadurch gekennzeichnet, daß der Verkantungswinkel der Gleitführung (12, 15) gegenüber der Stange (9) durch Anschläge (17) begrenzt ist, die die Gleitführung (12, 15) in axialem Abstand von ihren Klemmflächen (15) aufweist.

3. Regler nach Anspruch 2, dadurch gekennzeichnet, daß die Gleitführung (12, 15) durch eine Bohrung (15) und die Anschläge (17) durch das Ende einer axial sich anschließenden erweiterten Bohrung (16) in einem an dem Fixpunkt (13, 14) oder der Klappe angelenkten Teil (12) gebildet ist bzw. sind.

4. Regler nach Anspruch 3, dadurch gekennzeichnet, daß sich auf beiden Seiten der genannten Bohrung (15) eine erweiterte Bohrung (16) der genannten Art anschließt.

5. Regler nach einem der Ansprüche 1 bis 4, dadurch gekennzeichnet, daß das Material der Gleitführung (12, 15) ein Kunststoff, vorzugsweise Teflon oder Nylon, ist.

6. Regler nach einem der Ansprüche 1 bis 5, dadurch gekennzeichnet, daß die Stange (9) an dem genannten in Öffnungsstellung schräg nach vorne stehenden Schenkel der Klappe (3) angelenkt ist.

7. Regler nach einem der Ansprüche 1 bis 6, dadurch gekennzeichnet, daß die Gleitführung (12, 15) an einer Scheibe (5) angelenkt ist, die in Strömungsrichtung hinter der genannten Welle (2) axial in der Leitung (1) angeordnet ist und deren hinteres Ende vorzugsweise nach Lage und Kontur im wesentlichen eine bezüglich der Strömung konforme Abbildung des nach hinten stehenden Klappenschenkels bei einer mittleren Öffnungsstellung der Klappe (3) ist.

**Claims**

1. Regulator for the flow of a gaseous medium in a conduit wherein the effective cross-sectional area is variable by a flap which is turnable by the flow in a closing direction against the opposition of a spring force, especially a flap whose shaft is located close to a central axis of the cross-section and which is bent in the proximity of the shaft, one leg of the flap being substantially parallel to the axis of the conduit and extending rearwardly in the open position and sloping rearwardly in the closed position, the other leg of the flap sloping forwardly in open position and being disposed substantially at right angles to the axis of the conduit in the closed position, characterised in that the flap (3) is connected with a fixed point (13, 14) by a rod (9) which is articulately connected to the flap (3) and by a slideway (12, 15) which surrounds the rod (9) and is articulately connected with the fixed point (13, 14) or vice versa, the extent to which the slideway (12, 15) surrounds the rod (9), as considered in the axial direction, being so small that relative movement between the rod (9) and the slideway (12, 15) entails a canting and seizing of the slideway (12, 15) as a result of friction.

2. Regulator according to Claim 1, characterised in that the angle of canting of the slideway (12, 15) with reference to the rod (9) is limited by stops (17) which are provided on the slideway (12, 15) at an axial distance from its seizing surfaces (15).

3. Regulator according to Claim 2, characterised in that the slideway (12, 15) is formed by a bore (15) and the stops (17) are constituted by the end of a larger-diameter bore (16) adjacent to the first bore, as considered in the axial direction, such bores being provided in a part (12) which is articulately connected with the fixed point (13, 14) or with the flap.

4. Regulator according to Claim 3, characterised in that larger-diameter bores (16) of the aforementioned type are adjacent to both ends of said bore (15).

5. Regulator according to one of Claims 1 to 4, characterised in that the material of the slideway (12, 15) is a synthetic plastic substance, preferably Teflon or nylon.

6. Regulator according to one of Claims 1 to 5, characterised in that the rod (9) is articulately connected with the aforementioned leg of the flap (3) which slopes forwardly in the open position.

7. Regulator according to one of Claims 1 to 6, characterised in that the slideway (12, 15) is articulately connected with a disc (5) which is disposed behind the said shaft (2) and axially of the conduit (1), as considered in the direction of flow, and the position and outline of the rear end of which preferably constitute, with reference to the flow, an image of the rearwardly extending leg of the flap in the halfway open position of the flap (3).

**Revendications**

1. Régulateur d'écoulement d'un fluide gazeux dans une conduite, avec lequel la section libre de la conduite peut être modifiée par un volet que le courant de fluide peut, contre la force d'un ressort, faire tourner dans le sens de la fermeture, notamment un volet dont l'arbre est disposé à proximité d'un axe médian et qui est coudé près de cet arbre, l'une de ses ailes étant, en position d'ouverture, sensiblement parallèle a

l'axe de la conduite vers l'arrière et, en position de fermeture, inclinée vers l'arrière, son autre aile étant, en positin d'ouverture, inclinée vers l'avant et, en position de fermeture, sensiblement perpendiculaire à l'axe de la conduite, ce régulateur étant remarquable en ce que le volet (3) est relié à un point fixe (13, 14) par une tringle (9) et un guidage glissant (12, 15) articulé sur le point fixe (13, 14), ou inversement, l'entourage de la tringle (9) par le guidage glissant (12, 15) étant, dans le sens axial, suffisamment court pour qu'un mouvement relatif entre la tringle (9) et le guidage glissant (12, 15) conduise, par suite du frottement, à une mise en biais et à un blocage du guidage glissant (12, 15) sur la tringle (9).

2. Régulateur selon la revendication 1, remarquable en ce que l'angle de mise en biais du guidage glissant (12, 15) par rapport à la tringle (9) est limité par des butées (17) que présente le guidage glissant (12, 15) à distance axiale de ses surfaces de blocage (15).

3. Régulateur selon la revendication 2, remarquable en ce que le guidage glissant (12, 15) est constitué par un alésage (15), les butées (17) étant formées par l'extrémité d'un alésage (16) de plus grand diamètre s'y raccordant axialement formé dans une partie (12) aritculée sur le point fixe (13, 14) ou sur le volet.

4. Régulateur selon la revendication 3, remarquable en ce qu'un alésage de plus grand diamètre (16) du genre indiqué se raccorde à l'alésage (15) des deux côtés de celui-ci.

5. Régulateur selon l'une des revendications 1 à 4, remarquable en ce que la matière du guidage glissant (12, 15) est une matière synthétique, de préférence du téflon ou du nylon.

6. Régulateur selon l'une des revendications 1 à 5, remarquable en ce que la tringle (9) est articulée à celle des ailes du volet (3) qui, dans la dite position d'ouverture, est inclinée vers l'avant.

7. Régulateur selon l'une des revendications 1 à 6, remarquable en ce que le guidage glissant (12, 15) est articulé sur une plaque (5) qui, dans le sens de l'écoulement, est disposée axialement dans la conduite (1) derrière le dit arbre (2) et dont l'extrémité arrière est, de préférence, en position et en contour, la reproduction conforme, en ce qui concerne l'écoulement, de l'aile de volet dirigée vers l'arrière, lorsque le volet (3) est en position d'ouverture moyenne.

0 008 025

Fig. 1

Fig. 2

Fig. 3